# EUROPEAN PATENT APPLICATION

(11) **EP 1 596 566 A1**
(43) Date of publication of application: **16.11.2005**
(21) Application number: 04076227.0
(22) Date of filing: 23.04.2004
(51) Int. Cl.: H04M 3/54, H04M 7/00

(54) **Method of re-directing IP-telephone calls to a mobile telephone**

(71) Applicant: Dansk Mobiltelefon I/S, 9000 Aalborg (DK)
(72) Inventor: The designation of the inventor has not yet been filed
(74) Representative: Olesen, Kaj

(57) **Abstract**

The invention relates to a method of routing a telephone call from a calling party (CP) to an intended recipient (IR) associated to at least one Internet Telephone according to a routing routine (RR) comprising the steps of
determining whether the Internet Telephone of the intended recipient (IR) is reachable and
routing (R1) the call to the intended recipient if the intended recipient (IR) is reachable or
rerouting (R2) the call to a mobile telephone of the intended recipient of the recipient is not reachable by means of the at least one IP telephone (IPT).

According to the invention an advantageous reliability is added to conventional IP telephoning as non-reachability at the intended recipient may be compensated by a rerouting of the call to a fall-back connecting point; a mobile telephone.

## Description

### Field of the invention

The invention relates to a method of routing a telephone call according to claim 1.

### Background of the invention

Voice over Internet, also referred to as VoIP has been the object of extensive research and investments over the last few years. Generally VoIP may be referred to broadly as the intend to perform telecommunication via the Internet protocol, IP. The telecommunication may e.g. include IP telephones and Videophones, which are typically founded on the basis of a conventional computer, e.g. a PC, etc.

One system is disclosed in US patent no. 5,953,322 disclosing a cellular internet telephone comprising availing hybrid communication via and between the PSTN and the Internet.

The future of the IP telephone looks promising but currently the existing platforms have obtained very few users. This problem basically resides in the fact that the available IP platforms do not offer the same reliability as the existing PSTN networks offer.

It is the object of the invention to facilitate an advantageous and user-friendly IP based telephone communication method.

### Summary of the invention

The invention relates to a method of routing a telephone call from a calling party (CP) to an intended recipient (IR) associated to an Internet Telephone and a mobile telephone comprising the steps of
determining whether the Internet Telephone of the intended recipient (IR) is reachable and
routing (R1) the call to the intended recipient if the intended recipient (IR) is reachable or
rerouting (R2) the call to a mobile telephone of the intended recipient of the recipient is not reachable by means of the at least one Internet telephone.

According to the invention an advantageous reliability is added to conventional IP telephoning as non-reachability at the intended recipient may be compensated by a rerouting of the call to a fall-back connecting point; a mobile telephone.

According to the invention a mobile telephone is broadly understood as a mobile communication device, such as conventional mobile phones, PDA, wireless video-communication, WLAN-VoIP based cordless telephone etc.

It is generally noted that a VoIP operator is regarded as a central connecting point from which further routing to the intended recipients is established. However, it is noted that the centrality of the VoIP operator basically resides in the control of the data flow between the different calling and receiving parties and not necessarily in the fact that the actual dataflow must be pipelined physically via the the hardware of the VoIP operator.

A preferred way of determining whether the recipient is reachable by a conventional VoiP transmission of the call is to detect whether the recipient is connectable or connected to the VoiP operator network.

In an embodiment of the invention said rerouting of the call to the mobile telephone of the intended recipient is performed by at least one logic switch located between the calling party and the intended recipient and wherein said switch reroutes a VoiP-transmitted call to a mobile telecommunication network, preferably a GSM network, GPRS network, CDMA2000, UMTS network, etc.

According to the invention a mobile telecommunication network broadly refers to a conventional telecommunication network facilitating wireless communication. Examples of such systems are GSM or UMTS. The systems may be packet switched as e.g. UMTS or a hybrid version as the GSM, which also allows GPRS or WLAN communication.

The switching from the VoIP network into a mobile telecommunication network may be performed in several different ways within the scope of the invention. One central switch is preferred in some applications wheras other applications, e.g. a VoIP peer-to-peer network, such as Skype, facilitates a more decental control of the rerouting. A decentral re-routing may e.g. involve that switch protocols a stored decentrally, e.g. by a calling party ensuring that a call is rerouted if the VoIP based telephone of the intended recipient is off-line or simply not reachable.

In an embodiment of the invention said re-routing is performed by at least one VoIP operators (SO).

According to the invention, the control of the rerouting from a VoIP system should preferably be performed by a VoIP operator

In an embodiment of the invention information about reachability of the intended recipient by means of the at least one IP telephone (IPT) is stored centrally in at least one central storage (CS).

The updating of the central reachability information may both be updated by pushing or pulling, that is either be actively updating the reachability information by requesting reachability status information by the intended recipients or passively simply by registering reachability status information when it is submitted by the intended recipients.

In an embodiment of the invention further information about reachability of the intended recipient by means of the at least one mobile telephone (IRM) of the intended recipient is stored centrally in said at least one central storage (CS).

Thus a request or a passive pulling from the associated mobile network operator may provide reachability information to the VoIP operator, thereby availing that calls are not re-routed if the intended recipient is not reachable. In this way unnecessary rerouting around different telecommunication networks may be avoided as the calling party may receive upfront information about the "complete" reachability before any further routing from the VoIP operator.

In an embodiment of the invention further routing routines (FRR) are associated to the said routing routines (RR) which may be at least partly determined by the intended recipient.

A further routing schedule applicable within the scope of the invention may e.g. involve automatically routing to a mobile telephone of the intended recipient if the mobile telephone is switched on and covered by the mobile telecommunication network. Furthermore an intended recipient should preferably be able to determine that a call should not be rerouted to his mobile phone even if is IP telephone is disconnected.

In an embodiment of the invention a calling party (CP) comprises a mobile telephone which accesses the VoIP network via a PSTN-to-IP gateway.

When the calling party is using a mobile phone he/she may access the VoIP network via a gateway located e.g. at the VoIP or PSTN operator.

In an embodiment of the invention the billing of the calling party and optionally the recipient is established as a combined billing associated to the routing performed via the VoIP and the PSTN network respectively.

When facilitating a hybrid routing from one recipient to another it is further more important that the billing may be evaluated on the basis of a user-attractive way, namely on the basis of a minimal call routing via the PSTN and especially via the mobile telecommunications network. This may e.g. be obtained establishing gateways associated to the intended recipients and e.g. also the optional mobile calling parties so that the routing of mobile communication wherever possible is performed in the users "local" mobile telecommunication network, e.g. within a county, within a region of a country etc.

In an embodiment of the invention the rerouting further comprises a rerouting of text messages from the VoIP network into the PSTN network.

A preferred rerouting would involve that a VoIP text based message, e.g. a chat, is converted into an SMS message in a GSM network. Evidently, other message types of text-based messages are applicable within the scope of the invention, typically depending on the applied message type of the applied VoIP provider and the type of the protocol applied mobile network.

Furthermore, the invention relates to a telecommunication network comprising an interfaced VoIP network and a mobile telecommunication network operated according to any of the claims 1-10.

### The drawings

The invention will now be described with reference to the invention, where
fig. 1A illustrates a basic principle of the invention,
fig. 1B illustrates a further variant of the basic principle of the invention,
fig. 2 illustrates an example of a call routing routine applied according to a preferred embodiment of the invention and
fig. 3 illustrates a flowchart of the handling of a call according to an embodiment of the invention.

### Detailed description

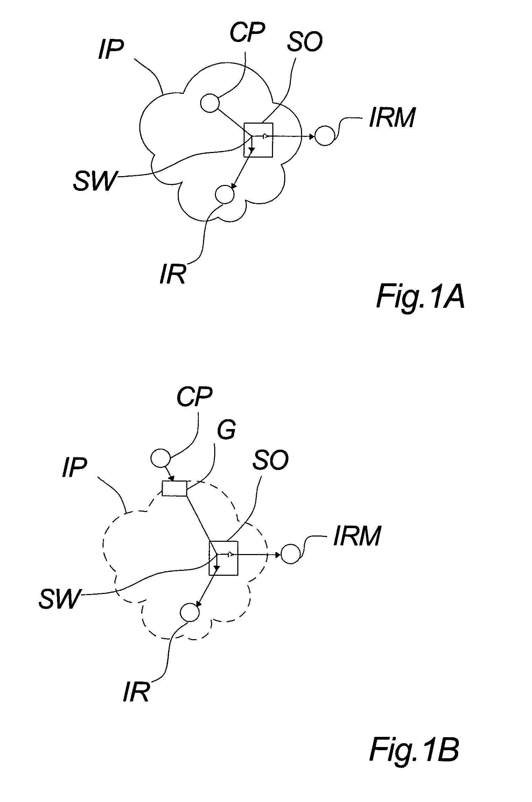

Fig. 1A illustrates a basic principle of the invention.

Basically, the illustrated telecommunication system is founded on the Internet IP, specifically the ability of the internet to transfer packet switched communication bearing data from one point to another.

Broadly, a telecommunication system based on the IP (IP: Internet Protocol) may be referred to as a VoIP system (VoIP: Voice over Internet Protocol). According to the framework of the invention, a VoIP system may refer not only to audio communication but also video or other suitable communication bearing methods.

A VoIP system may be managed by one or several VoIP operators. Today, several providers are offering Internet Telephony.

A basic routing according to the invention is illustrated here as a communication between a calling party CP and an intended recipient IR. In this illustrated embodiment both the calling party and the intended recipient are IP based. According to the invention, the calling party may in principle be communicating by any available telecommunication method or device as long as the call or a request for a call at one time or another is routed via the Internet Protocol IP. A relevant VoIP operator SO, here associated to the intended recipient IR manages a switch SW enabling that the initial intended IP routing to the intended recipient IR may be rerouted if the intended recipient is not reachable.

A suitable condition for establishing a rerouting may preferably rely on the fact that the Internet telephone of the intended recipient is not connected, i.e. not connectable. Evidently, other supplementary rerouting parameters may be applicable and managed by the IP telephone operator OS.

If the intended recipient is not connectable, e.g. off-line, the IP telephone operator may centrally switch the call to an external telecommunication network for the purpose of routing the call centrally to the intended recipient via a mobile telecommunication network, e.g. a GSM, UMTS or other suitable wireless network facilitating an alternative wireless transmission to the intended recipient, an intended mobile recipient IRM.

Hence, the switch avails a central interfacing from the IP to the mobile communication network according to information at the VoIP operator enabling that the intended recipient may be called by an alternative method, specifically a mobile telecommunication network.

If the intended recipient is not reachable anyway, the incoming call may be routed to an answering machine or other suitable equipment for handling of not-received incoming calls at the operator of mobile network or e.g. managed by the VoIP operator.

Alternatively, a further way of managing an incoming call which may not be connected to an intended recipient via the IP telephone is that a request or a passive pulling from the associated mobile network operator may provide reachability information to the VoIP operator, thereby availing that calls are not re-routed if the intended recipient is not reachable.

Fig. 1B illustrates a variant of the above basic principle of the invention of fig. 1A basically comprising the same network elements as the above described.

In this embodiment, however, a gateway G is added to the network facilitating an interface from a mobile telecommunication network into the VoIP network. In the illustrated embodiment a calling mobile party has accessed the VoIP network for the purpose of calling the intended recipient IR.
The access to the gateway G may be controlled either by the telecommunication network operator or the VoIP provider and it may e.g. be established by a mobile calling party calling a predetermined telephone number and subsequently submitting an IP number to the gateway identifying the intended recipient to the VoIP provider SO, which may from thereon take over the routing of the call. Evidently, other operations of gateways may be applicable within the scope of the invention.

The routing from the gateway G and further to the intended recipient may basically be performed as explained in fig. 1B.

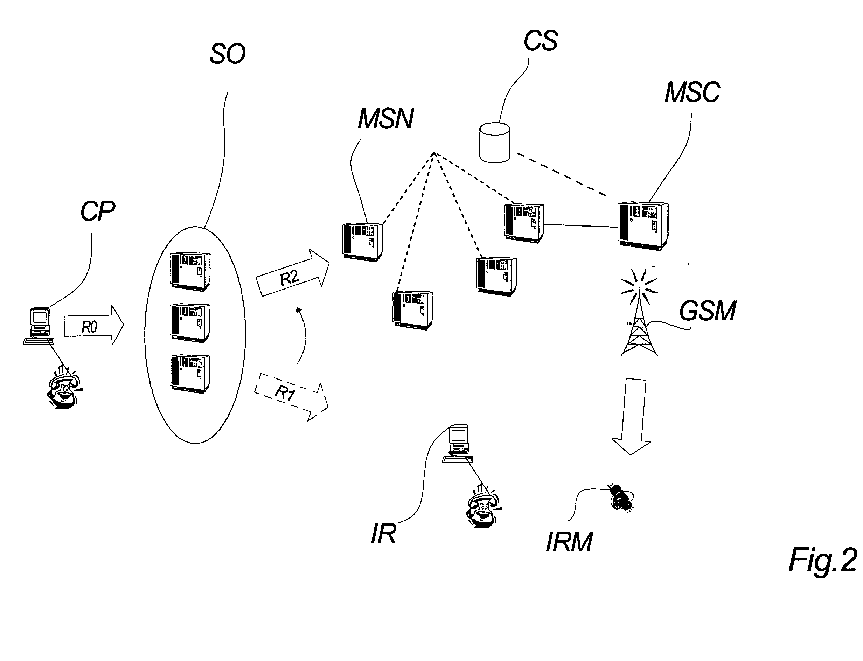

Fig. 2 illustrates an example of a call routing routine according to a preferred embodiment of the invention according to a system as described in fig. 1A or fig. 1B.

In the illustrated drawing a calling party is initiating a call by means of an initial routing R0 to one of the VoIP operators SO. The initial routing R0 may basically be regarded as a request to establish a telephone call to an intended recipient IR.

The intended recipient IR is basically regarded to be a so-called Softphone, that is a telephone adapted for telephone audio and optionally also video communication. The call to the recipient may be established by a switch controlled by the VoIP operators in typically two different ways, one routing R1 of the call directly to the intended recipient if certain conditions are met, and another routing R2 of the call interfacing into a mobile network enabling that the call is routed to the mobile phone of the intended recipient IRM.

Typically, a basic switch criteria for by-passing the softphone of the intended recipient IR is that the softphone is off-line and thus an alternative routing, namely R2 is established for the purpose of reaching the intended recipient in spite of the fact that the intended recipient has closed down the softphone; i.e. e.g. that a computer serving as the basis for a softphone is off-line or closed down.

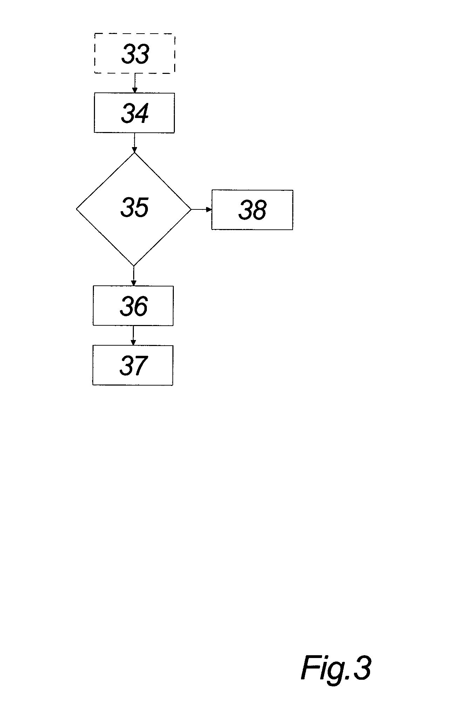

Fig. 3 shows a flowchart illustrating the basic steps of routing a call to an intended recipient according to an embodiment of the invention.

In step 33 a call is initiated by a calling party. The call may be established as a conventional PSTN call; i.e. a call established in the conventional dedicated telecommunication system, cordless or wired. Step 33 is basically optional, as a call may likewise simply be established as an VoIP call in according to the next step 34.

In step 34 the call of the calling party is interfaced into the IP domain by the VoIP operator by an internal VoIP procedure. The procedure typically involves a look-up an internal database or e.g. an external database available to the VoIP operator for identification of the intended recipient.

In step 35 a reachability of the intended recipient is determined on the basis of predetermined criteria. The basic criteria may simply be to determine whether the intended recipient is connected or connectable at the time of the requested call. Further layers of call logic may be added to this basic criteria in the form of possible modified rerouting schedules, e.g. rules determining that a call should be rerouted only if the intended recipient is disconnected and wants the call to be transferred to his or her mobile telephone. Other possible criteria is optionally to bypass the call anyway if certain criteria are met.

Furthermore, reachability of the intended recipient by means of the mobile telecommunication network may be determined, thereby avoiding further unnecessary routing of the call. Such a reachability determination exterior to the mobile telecommunication network evidently requires a push or pull interface into the control logic of the mobile telecommunication network.

Although, as explained above, further layers of rerouting criteria may be applied, the basic concept of rerouting a call to the mobile network if the intended recipient is disconnected from the VoIP telephone should be maintained. Derogations from this basic rule should basically be applied as an exception.

Principles of determination and handling of further reachability and availability criteria are described in the published WO 02/32094 A1 by the applicant, hereby incorporated by reference.

In step 38 the call is transferred to the VoIP telephone of the intended recipient according to the request of the calling party.

In step 36 the call is rerouted to a mobile telecommunication network in order to reach the intended recipient by a mobile communication device instead of the VoIP telephone.

In step 37 billing of the call is established and put into records. The merged billing of the call may be recorded at both the VoIP operator or the mobile telecommunication operator.

## Claims

1. Method of routing a telephone call from a calling party (CP) to an intended recipient (IR) associated to an Internet Telephone and a mobile telephone comprising the steps of
determining whether the Internet Telephone of the intended recipient (IR) is reachable and
routing (R1) the call to the intended recipient if the intended recipient (IR) is reachable or
rerouting (R2) the call to a mobile telephone of the intended recipient of the recipient is not reachable by means of the at least one Internet telephone.

2. Method of routing a telephone call according to claim 1,
wherein said rerouting of the call to the mobile telephone of the intended recipient is performed by at least one logic switch located between the calling party and the intended recipient and wherein said switch reroutes a VoiP-transmitted call to a mobile telecommunication network, preferably a GSM network, GPRS network, CDMA, UMTS network, etc.

3. Method of routing a telephone call according to claim 1 or 2,
wherein said re-routing is performed by at least one VoIP operators (SO).

4. Method of routing a telephone call according to any of the claims 1-3,
wherein information about reachability of the intended recipient by means of the at least one IP telephone (IPT) is stored centrally in at least one central storage (CS).

5. Method of routing a telephone call according to any of the claims 1-4,
wherein further information about reachability of the intended recipient by means of the at least one mobile telephone (IRM) of the intended recipient is stored centrally in said at least one central storage (CS).

6. Method of routing a telephone call according to any of the claims 1-5,
wherein further routing routines (FRR) are associated to the said routing routines (RR) which may be at least partly determined by the intended recipient.

7. Method of routing a telephone call according to any of the claims 1-6,
wherein a calling party (CP) comprises a mobile telephone which accesses the VoIP network via a PSTN-to-IP gateway.

8. Method of routing a telephone call according to any of the claims 1-7,
wherein the billing of the calling party and optionally the recipient is established as a combined billing associated to the routing performed via the VoIP and the PSTN network respectively.

9. Method of routing a telephone call according to any of the claims 1-8,
wherein said rerouting further comprises a rerouting of text messages from the VoIP network into the PSTN network.

10. Telecommunication network comprising an interfaced VoIP network and a mobile telecommunication network operated according to any of the claims 1-8.
